# EUROPÄISCHE PATENTSCHRIFT

(11) **EP 2 289 058 B1**
(45) Veröffentlichungstag und Bekanntmachung des Hinweises auf die Patenterteilung: **21.09.2011**
(21) Anmeldenummer: 09761523.1
(22) Anmeldetag: 15.06.2009
(51) Int. Cl.: G08G 1/0962, G01C 21/36, G08G 1/0969

(54) **VERFAHREN ZUR KOMBINIERTEN AUSGABE EINES BILDES UND EINER LOKALINFORMATION, SOWIE KRAFTFAHRZEUG HIERFÜR**
METHOD FOR COMBINED OUTPUT OF AN IMAGE AND A PIECE OF LOCAL INFORMATION AND CORRESPONDING MOTOR VEHICLE
PROCÉDÉ DE SORTIE COMBINÉE D'UNE IMAGE ET D'UNE INFORMATION LOCALE, ET VÉHICULE À MOTEUR ASSOCIÉ

(30) Priorität: 13.06.2008 DE 102008028374
(43) Veröffentlichungstag der Anmeldung: 02.03.2011
(73) Patentinhaber: Audi AG, 85045 Ingolstadt (DE)
(72) Erfinder: RÜB, Gernot, 85049 Ingolstadt (DE); SCHÖNHERR, Kristin, 09496 Marienberg (DE)
(74) Vertreter: Mader, Wilfried
(86) Internationale Anmeldenummer: PCT/EP2009/004298
(87) Internationale Veröffentlichungsnummer: WO 2009/149960

(56) Entgegenhaltungen:
- WO-A-2006/037402
- WO-A-2007/119472
- DE-A1- 10 343 942

## Beschreibung

Die Erfindung betrifft ein Verfahren zur kombinierten Ausgabe eines Bildes einer Bildaufnahmeeinrichtung und wenigstens einer einen im Bild gezeigten Ort kennzeichnenden oder diesem zuzuordnenden Lokalinformation an einer Anzeigeeinrichtung eines Kraftfahrzeugs, mit den Merkmalen des Oberbegriffs des Anspruchs 1.

Die Verwendung von Bildaufnahmeeinrichtungen in Form von Kameras oder auch Nachtsichtkameras für die Bildaufnahme bei Dunkelheit sowie die Anzeige der durch die Bildaufnahmeeinrichtung oder Bildaufnahmeeinrichtungen aufgenommenen Bilder in einer oder mehreren Anzeigeeinrichtungen innerhalb eines Kraftfahrzeugs ist bekannt. Solche Anzeigeeinrichtungen befinden sich dabei typischerweise im Armaturenbrett oder in der Mittelkonsole des Kraftfahrzeugs. Die Bilder der Kamera werden auch mit Informationen aus Fahrerassistenzsystemen überlagert, um den Informationsgehalt der Bilder zu erhöhen. Beispielsweise ist es möglich, eine Information über die aktuelle Geschwindigkeitsbegrenzung über den Bilddaten der Bildaufnahmeeinrichtung zu platzieren. Auch andere Informationen wie etwa die Fahrgeschwindigkeit oder Fahrhinweise aus einer Navigationseinrichtung lassen sich darstellen. Eine Möglichkeit zur Anzeige der durch die Zielführung der Navigationseinrichtung bestimmten Fahrtrichtung ist dabei, einen Pfeil stehend darzustellen, wenn das Fahrzeug geradeaus fahren soll oder den Pfeil um einen beliebigen Winkel zu drehen, insbesondere um 90°, um an einer Kreuzung die weitere Fahrtrichtung vorzugeben. Dieser Hinweis auf die Fahrtrichtung genügt üblicherweise.

Es gibt allerdings auch Fahrsituationen, in denen diese Darstellung der Zielführung nicht immer eindeutig ist. Beispielsweise ist auf Straßen mit mehreren Fahrspuren nicht immer klar, welcher Spur zu folgen ist. An unübersichtlichen Kreuzungen bzw. kurz hintereinander folgenden Abzweigungen beispielsweise in einem Kreisverkehr ist die richtige Ausfahrt nicht klar zu erkennen. Der Fahrer kann dann entweder die Fahrgeschwindigkeit erheblich herabsenken oder er muss den Blick länger von der Straße abwenden, um die in der Anzeigeeinrichtung dargestellte Zielführung genau zu analysieren.

In diesen Situationen helfen dann auch die Sprachausgaben der Navigationseinrichtung nicht weiter.

Ein Verfahren der eingangs genannten Art ist aus WO 2006/037402 A1 bekannt. Dort wird eine Fahrbahnerkennung sowie eine Ermittlung des Straßenverlaufs durchgeführt, wie auch eine Ermittlung eines außerhalb des Sichtfelds liegenden Straßenverlaufs, um gestützt auf diese Informationen eine den nicht sichtbaren Straßenverlauf vorhersagende positionsrichtige Anzeige in einem Kamerabild positionsgenau und perspektivisch richtig einzublenden. Zusätzlich besteht die Möglichkeit, eine Richtungsanzeige mit einzublenden.

Der Erfindung liegt damit die Aufgabe zugrunde, ein Verfahren zur kombinierten Ausgabe eines Bildes und einer Information anzugeben, durch das das Erfassen einer Information für den Fahrer verbessert wird bzw. das den Fahrer auch in unübersichtlichen Fahrsituationen derart informiert, dass keine Interpretationsfreiräume bleiben.

Zur Lösung ist erfingdungsgemäß ein Verfahren der eingangs genannten Art vorgesehen, mit den Merkmalen des Kennzeichens des Anspruchs 1.

Erfindungsgemäß wird dem Fahrer also nicht nur angezeigt, dass er beispielsweise abbiegen soll, sondern er wird auch ortsgenau darüber informiert, welche Ausfahrt er benutzen soll. Genauso ist es denkbar, dass dem Fahrer auf einer vielspurigen Straße genau die Spur angezeigt wird, der er folgen soll. Damit weiß der Fahrer auch in unübersichtlichen Fahrsituationen, wie er zu handeln hat.

Vorteilhafterweise können die zur ortsgenauen Zuordnung benötigten Daten über die Lokalinformation und/oder die aktuelle Position des Kraftfahrzeugs aus einer Navigationseinrichtung des Kraftfahrzeugs und/oder über eine an einen Fahrzeugbus angeschlossene und vom Kraftfahrzeug unabhängige Einrichtung, insbesondere ein Mobiltelefon, ermittelt werden. Um das Bild der Bildaufnahmeeinrichtung mit einer Lokalinformation überlagern zu können, benötigt man einerseits die genaue Position des eigenen Ortes wie auch Angaben über Lokalinformationen. Lokalinformationen können sich dabei auf besondere Lokalitäten beziehen, sogenannte points of interest, die also mit der eigentlichen Zielführung nicht unbedingt etwas zutun haben, andererseits lassen sich dadurch eben auch Gefahrenpunkte oder Entscheidungspunkte in der Zielführung besonders hervorheben. Dies sind beispielsweise Autobahnausfahrten, Ausfahrten an einem Kreisverkehr, Kreuzungen oder auch das Einordnen auf der richtigen Fahrspur. Informationen über die aktuelle Position erhält die Steuerungseinrichtung, die die Informationen kombiniert und zur Ausgabe an die Anzeigeeinrichtung weitergibt, normalerweise aus einer im Fahrzeug befindlichen Navigationseinrichtung. Diese hält dann auch Lokalinformationen bereit. Es ist aber auch denkbar, Fahrzeuge ohne Navigationseinrichtung oder mit defekter Navigationseinrichtung für das erfindungsgemäße Verfahren dadurch einsetzbar zu machen, dass die Informationen über ein Mobiltelefon gewonnen und über den Fahrzeugbus der Steuerungseinrichtung zugänglich gemacht werden. Auch Mobiltelefone lassen sich präzise orten und über Web-Dienste sind auch heute schon Lokalinformationen zugänglich, die durch internetfähige Mobiltelefone ebenfalls abgerufen werden können. Internetdienste, die Lokalinformationen und auch eine Routenplanung anbieten, sind beispielsweise "Google Maps" oder auch "MS Virtual Earth".

Erfindungsgemäß umfaßt die Darstellung der Lokatinformationen einen Bereich zur Anzeige einer Information und einen Bereich zur Positionsanzeige Dabei kann der Bereich zur Positionsanzeige nadel-, linien- oder pfeilförmig dargestellt werden. Der Bereich zur Anzeige der Information kann dadurch in einem beliebigen Bildbereich positioniert werden, während erfindungsgemäß der Bereich zur Positionsanzeige die Zuordnung der Information zu einem im Bild gezeigten Ort ermöglicht. Bei Bewegung des Kraftfahrzeugs und dadurch sich ständig ändernder Bildinformationen aus der Bildaufnahmeeinrichtung kann dadurch auch erreicht werden, dass die Information an einem festen Ort der Anzeigeeinrichtung stehend dargestellt wird, während die Zuordnung zu dem sich im Bild bewegenden Ort durch eine dem Ort folgende Positionsanzeige erfolgt.

Mit besonderem Vorzug kann die Darstellung der Lokalinformationen bei Annäherung des Kraftfahrzeugs an den der Lokalinformation zugeordneten Ort unterproportional vergrößert und/oder ihre Farbe und/oder ihre Transparenz verändert werden. Durch die Änderung der Darstellung der Lokalinformation wird eine Abstandsinformation möglich, ohne dem Fahrer einen Zahlenwert zum Ablesen vorgeben zu müssen. Beispielsweise kann sich der Farbton von einem ruhigen blau in ein warnendes rot oder ein aggressives gelb umwandeln, um die Annäherung des Kraftfahrzeugs an den der Lokalinformation zugeordneten Ort zu verdeutlichen. Wird die Lokalinformation schon bei einem großen Abstand zum Ort dargestellt, muss die Information wie auch der Bereich zur Positionsanzeige trotzdem in einer Größe dargestellt werden, dass der Fahrer die Information erkennen kann, also überproportional groß. Nähert sich dann das Kraftfahrzeug an den der Lokalinformation zugeordneten Ort, kann die Darstellung der Lokalinformation nicht mehr proportional vergrößert werden, da die Darstellung sonst zu groß für die Fläche der Anzeigeeinrichtung anwachsen würde. Daher ist eine unterproportionale Vergrößerung bei Annäherung des Kraftfahrzeugs an den zugeordneten Ort vorgesehen.

Mit besonderem Vorteil kann die Lokalinformation ab einem vorgegebenen Abstand des Kraftfahrzeugs zu dem der Lokalinformation zugeordneten Ort angezeigt werden. Dieser Abstand ist dabei von mehreren Faktoren abhängig. Zwar könnte prinzipiell auch ein fester Wert gewählt werden, allerdings ist dies nicht sinnvoll. Vielmehr ist eine Abhängigkeit des Abstands von der Straßenklasse, von der Fahrgeschwindigkeit, von der Fahrzeugumgebung oder auch dem Straßenverlauf angezeigt. Der Abstand soll also abhängig davon variieren, wie schnell sich das Fahrzeug bewegt, ob es sich innerorts oder außerorts befindet, ob es auf einer Bundesstraße oder einer Autobahn fährt. Insbesondere innerorts ist es denkbar, dass mehrere Straßenkreuzungen dicht aufeinander folgen, zu denen jeweils Lokalinformationen vorliegen. Um den Fahrer nicht zu verwirren, wird dann entweder nur jeweils die nächste oder die nächsten zwei Lokalinformationen angezeigt.

Vorteilhafterweise kann die Darstellung der Lokalinformationen bei Nichtsichtbarkeit des entsprechenden Ortes im Bild der Bildaufnahmeeinrichtung von der Darstellung der Lokalinformation bei Sichtbarkeit des entsprechenden Ortes im Bild der Bildaufnahmeeinrichtung abweichend und auf den Ort verweisend dargestellt werden. Gründe für die Nichtsichtbarkeit des entsprechenden Ortes im Bild der Bildaufnahmeeinrichtung sind beispielsweise, dass der Ort hinter einer noch zu befahrenden Kurve liegt und damit nicht im Aufnahmebereich der Kamera liegt, andererseits kann der Ort auch durch Objekte wie etwa Häuser verdeckt sein. Befindet sich das Kraftfahrzeug aber schon in einem derartigen Abstand zum Ort, dass die Lokalinformation an und für sich angezeigt werden sollte, so wird dem Fahrer wenigstens der Bereich zur Anzeige der Information dargestellt sowie ein Hinweis auf den Ort, an dem die Lokalinformation bei Sichtbarkeit des entsprechenden Ortes im Bild angezeigt werden wird.

Mit besonderem Vorteil kann zur ortsgenauen Zuordnung der wenigstens einen Lokalinformation als gegebenenfalls weitere Information wenigstens eine Information aus einer Spurerfassungseinrichtung des Kraftfahrzeugs verwendet werden. Zur Verbesserung der wenigstens einen Information der Spurerfassungseinrichtung kann wenigstens eine Information der Navigationseinrichtung verwendet werden. Die Bestimmung der aktuellen Position durch die Navigationseinrichtung ist lediglich auf drei bis zwanzig Meter genau. Dementsprechend genau kann auch bei alleiniger Verwendung der Navigationseinrichtung lediglich die Zuordnung der Lokalinformation zu einem im Bild gezeigten Ort erfolgen. Zur spurgenauen Ortserfassung können daher Informationen einer Spurerfassungseinrichtung herangezogen werden. Diese analysiert hierzu das Bild der Bildaufnahmeeinrichtung oder das Bild einer weiteren Bildaufnahmeeinrichtung, um die Spurinformationen zu ermitteln. Aus den Bilddaten generiert die Spurerfassungseinrichtung Spurhypothesen, aus denen die wahrscheinlichste ausgewählt wird. Hierzu kann auch wieder auf Informationen der Navigationseinrichtung zurückgegriffen werden. Die Navigationseinrichtung liefert nämlich nicht nur Angaben über die aktuelle Position des Kraftfahrzeugs sondern auch sogenannte prädikative Streckendaten. Diese beinhalten für die vorausliegenden Segmente der Fahrtstrecke, die Informationen über die Länge des Segments, die Krümmungen der Fahrstrecke, die Anzahl der Spuren, die auf der oder den Spuren zu befahrende Fahrrichtung sowie die Zielspur. Die letzte Information liegt selbstverständlich nur vor, wenn die Zielführung der Navigationseinrichtung aktiviert ist, ansonsten berechnet die Navigationseinrichtung eine wahrscheinlichste Route und gibt diese weiter. Die anderen Informationen können allerdings auch bezogen werden, wenn die Zielführung nicht aktiviert wurde. Mit Hilfe dieser Informationen kann die Spurerfassungseinrichtung dann aus den generierten Hypothesen die Wahrscheinlichste auswählen. Hierdurch wird eine von der Bildauflösung des Bildes der Bilderaufnahmeeinrichtung abhängige Genauigkeit in der Ortsbestimmung des Kraftfahrzeugs erreicht. Diese ist wesentlich genauer als die durch die Navigationseinrichtung ursprünglich erreichte Positionsbestimmung. Dies benötigt selbstverständlich eine dementsprechend genaue Registrierung der Kameraposition auf dem Kraftfahrzeug bezüglich des Kraftfahrzeugs.

Zusätzlich kann zur ortsgenauen Zuordnung der wenigstens einen Lokalinformation als gegebenenfalls weitere Information wenigstens eine Information eines Lenkwinkelsensors und/oder eines Radwinkelsensors und/oder eines Blinkerbetätigungssensors und/oder eines Geschwindigkeitssensors und/oder eines Abstandssensors und/oder eines Gierratensensors des Kraftfahrzeugs verwendet werden. Diese Informationen können entweder dazu verwendet werden, die Hypothesenauswahl der Spurerfassungseinrichtung weiter zu verbessern, andererseits können sie auch dazu verwendet werden, die Steuerungseinrichtung zu entlasten. Ist aufgrund der Informationen der weiteren Einrichtungen ein Spurwechsel nicht wahrscheinlich, muss die Spurerfassungseinrichtung nicht in Anspruch genommen werden. Die so frei werdenden Ressourcen können anderweitig eingesetzt werden.

In besonders vorteilhafter Ausgestaltung kann in der Anzeigeeinrichtung als zusätzliche Lokalinformation der empfohlene Fahrweg oder die empfohlene Fahrspur in Form eines Navigationspfeils dem im Bild gezeigten Fahrbahnverlauf ortsgenau überlagert dargestellt werden. Die Anzeige des Navigationspfeils erfordert die Aktivierung der Zielführung der Navigationseinrichtung. Dann kann zusätzlich zu den oben genannten Lokalinformationen auch eine Fahrinformation in Form eines Navigationspfeils über das in der Anzeigeeinrichtung dargestellte Bild gelegt werden. Ferner kann die Länge und/oder die Farbe und/oder die Größe und/oder die Transparenz des Navigationspfeils in Abhängigkeit zur Entfernung zum der Lokalinformation zugeordneten Ort und/oder in Abhängigkeit der Fahrzeuggeschwindigkeit und/oder der Straßenklasse dargestellt werden. Die Länge des Navigationspfeils kann dabei insbesondere von der Fahrzeuggeschwindigkeit und der Straßenklasse abhängen. Je schneller das Fahrzeug unterwegs ist, desto länger sollte auch der Navigationspfeil dargestellt werden. Die Längenänderung kann dabei entweder in diskreten Schritten erfolgen oder auch kontinuierlich von der Fahrzeuggeschwindigkeit abhängen. Die Farbe, Größe und Transparenz des Navigationspfeils werden bevorzugt in Abhängigkeit zur Entfernung zum der Lokalinformation zugeordneten Ort verändert. Hierdurch ergibt sich analog zu den bezüglich der Darstellung der Lokalinformation weiter oben bereits genannten Änderungen eine Abstandsinformation, die ohne Zahlenanzeige in der Anzeigeeinrichtung auskommt.

In besonders vorteilhafter Ausgestaltung kann bei Annäherung des Kraftfahrzeugs an einen Abbiegepunkt der Navigationspfeil wenigstens teilweise aufgestellt dargestellt werden. Der Navigationspfeil liegt typischerweise vor dem Kraftfahrzeug. Bei zu kurzem Abstand zu einem Abbiegepunkt ist die Lage des Navigationspfeils in der Anzeigeeinrichtung allerdings nur noch schwierig auszumachen. Daher ist es sinnvoll, wenigstens den Kopfbereich des Navigationspfeils aufzustellen, damit er in der Anzeigeeinrichtung für den Fahrer gut sichtbar und wahrnehmbar dargestellt wird.

Zweckmäßigerweise kann die Darstellung des Navigationspfeils durch wenigstens eine Information einer 3D-Kamera an die in der Anzeigeeinrichtung dargestellte Bodenebene des Bildes der Bildaufnahmeeinrichtung vor dem Kraftfahrzeug angepasst werden. Sind die Bodenebene und die Kameraebene nicht parallel bzw. ändert sich der im Vergleich zu ebener Bodenebene vorhandene Winkel, kann es passieren, dass der Fahrer den Eindruck erhält, dass sich der in der Anzeigeeinrichtung dargestellte Navigationspfeil sozusagen in die Bodenebene des Bildes bohrt oder von dieser abhebt. Zur Erfassung der Bodenebene vor dem Kraftfahrzeug kann aber eine 3D-Kamera eingesetzt werden, und mit dieser Information kann der Navigationspfeil durchgängig auf der Bodenebene liegend dargestellt werden.

Daneben betrifft die Erfindung auch ein Kraftfahrzeug, umfassend wenigstens eine Bildaufnahmeeinrichtung, wenigstens ein Fahrerassistenzsystem, eine Positionsbestimmungseinrichtung, eine Einrichtung zum Ermitteln wenigstens einer Lokalinformation, eine Steuerungseinrichtung und eine Anzeigeeinrichtung zur Durchführung des erfindungsgemäßen Verfahrens.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Kraftfahr- zeugs,
- Fig. 2: die Darstellung einer kombinierten Ausgabe an einer Anzeige- einrichtung in einer ersten Ausführungsform,
- Fig. 3: die Darstellung einer kombinierten Ausgabe an einer Anzeige- einrichtung in einer zweiten Ausführungsform,
- Fig. 4: die Darstellung einer kombinierten Ausgabe an einer Anzeige- einrichtung in einer dritten Ausführungsform,
- Fig. 5: die Darstellung einer kombinierten Ausgabe an einer Anzeige- einrichtung in einer vierten Ausführungsform,
- Fig. 6: eine Prinzipdarstellung einer Spurhypothese ohne Zusatzinfor- mationen, und
- Fig. 7: eine Prinzipdarstellung einer Spurhypothese bei Verwendung prädikativer Streckendaten.

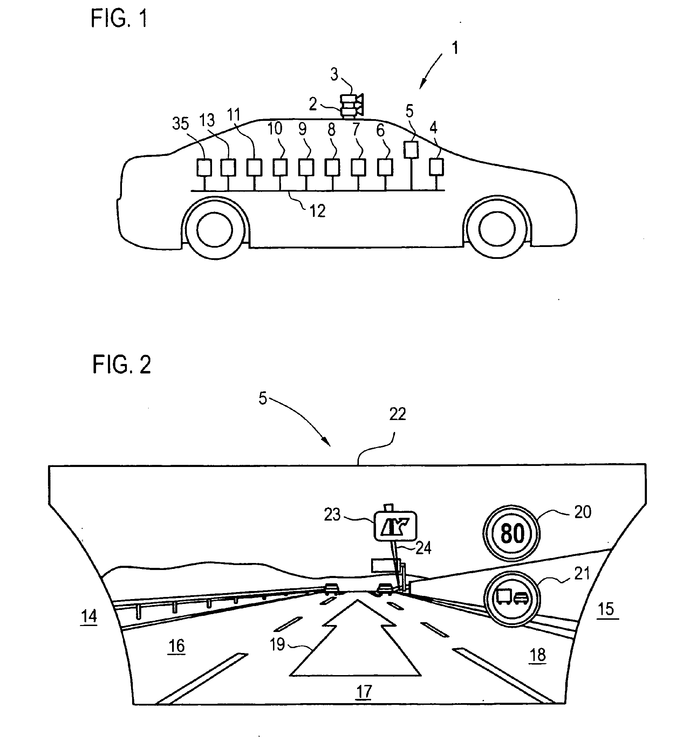

Fig. 1 zeigt ein Kraftfahrzeug 1 mit einer Kamera 2, einer 3D-Kamera 3, einer Steuerungseinrichtung 4, einer Anzeigeeinrichtung 5, einer Navigationseinrichtung 6, einem Lenkwinkelsensor 7, einem Radwinkelsensor 8, einem Blinkerbetätigungssensor 9, einem Geschwindigkeitssensor 10, einem Abstandssensor 11, einem Gierratensensor 35 und einem Bus 12. Die Kamera 2 liefert Bilddaten an die Steuerungseinrichtung 4 zur Ausgabe eines Echtzeit-Videobildes an der Anzeigeeinrichtung 5. Aus der Navigationseinrichtung 6 erhält die Steuerungseinrichtung 4 Informationen über die aktuelle Position des Kraftfahrzeugs 1, sowie über prädikative Streckendaten in Form der Spurkrümmungen, Anzahl der Fahrspuren sowie der Länge der zu befahrenden Streckensegmente. Bilder der Kamera 2 sowie die prädikativen Streckendaten der Navigationseinrichtung 6 werden von der Steuerungseinrichtung 4 an die Spurerfassungseinrichtung 13 gegeben. Diese ermittelt aus den Bildern der Kamera 2 Spurhypothesen, und wählt aus diesen unter Benutzung der prädikativen Streckendaten sowie unter Verwendung weiterer Informationen der Einrichtungen 6-11 die wahrscheinlichste Spurhypothese aus. Dadurch kann die Genauigkeit der Ortsbestimmung, die durch die Navigationseinrichtung 6 auf drei bis zwanzig Meter genau erfolgt, weiter verbessert werden. Diese verbesserte Ortsbestimmung hängt dann einerseits von der Richtigkeit der Spurerfassung ab, andererseits ist sie durch die Auflösung der durch die Kamera 2 erzeugten Bilder begrenzt.

Nach der genauen Positionsbestimmung kann die Steuerungseinrichtung 4 die Bilder 22 der Kamera 2 ortsgenau mit Lokalinformationen derart überlagern, dass eine ortsgenaue Zuordnung der Lokalinformation zu dem im Bild 22 gezeigten Ort erreicht wird. Diese kombinierte Information aus Bildern der Kamera 2 und Lokalinformationen der Navigationseinrichtung 6 wird an der Anzeigeeinrichtung 5 ausgegeben.

Die Informationen der Einrichtungen 7-11 und 35 sowie die Bilder und Informationen der 3D-Kamera 3 können dazu verwendet werden, die Robustheit der Spurerfassung weiter zu erhöhen. Wird das Kraftfahrzeug 1 beispielsweise auf einer Autobahn bewegt, beträgt die Anzahl der Fahrspuren in der Bundesrepublik Deutschland meistens zwischen zwei und vier. Erkennt die Spurerfassungseinrichtung 13 nun vermeintlich das Befahren der am weitesten links befindlichen Fahrspur, so kann diese Hypothese dadurch entkräftet werden, dass der Lenkwinkelsensor 7, der Gierratensensor 35 oder der Radwinkelsensor 8 eine Fahrtrichtungsänderung derart erkennen, dass ermittelt wird, dass sich das Fahrzeug auf eine noch weiter links befindliche Fahrspur bewegt. Dann ist die Hypothese, dass das Fahrzeug 1 bereits auf der am weitesten links befindlichen Fahrspur gefahren wird, offensichtlich falsch. Die Information des Lenkwinkelsensors 7 oder des Radwinkelsensors 8 oder des Gierratensensors 35 wird also zu einer Überprüfung bzw. Plausibilisierung der durch die Spurerfassungseinrichtung 13 ermittelten Fahrspur herangezogen. Bei relativ dichtem, beispielsweise innerstädtischem Verkehr, kann auch über die 3D-Kamera die Anzahl vorhandener Fahrspuren ermittelt werden, indem die Spurbelegung ausgewertet wird. In ähnlicher Weise können auch Informationen des Abstandssensors 11 verwendet werden.

Alternativ ist auch denkbar, dass die von der Spurerfassungseinrichtung 13 erkannte Fahrspur als richtig angenommen wird und die Spurerkennung zuerst einmal auch als abgeschlossen betracht wird. Erst bei Betätigen des Blinkers, das durch einen Blinkerbetätigungssensor 9 überwacht wird, wird die Spurerfassungseinrichtung 13 wieder aktiviert. Auch eine Aktivierung durch Informationen der anderen Einrichtungen wie der Navigationseinrichtung 6, des Lenkwinkelsensors 7, des Radwinkelsensors 8 oder auch des Abstandssensors 11 ist möglich Dadurch kann in der Steuerungseinrichtung 4 bzw. der Spurerfassungseinrichtung 13 Rechenkapazität eingespart und anderweitig eingesetzt werden.

Fig. 2 zeigt die Darstellung einer kombinierten Ausgabe an einer Anzeigeeinrichtung 5. Die Anzeigeeinrichtung 5 (z. B. LCD-Display) befindet sich im Armaturenbrett des Kraftfahrzeugs zwischen der Drehzahlanzeige 14 und dem Tachometer 15. Dem Bild 22 der Kamera 2 sind mehrere Informationen überlagert. Das Kraftfahrzeug wird auf einer Autobahn bewegt, dementsprechend sind im Bild 22 drei Fahrspuren 16, 17 und 18 zu erkennen. Dem Bild 22 sind auch Informationen überlagert, die keinen Bezug zu einem direkten Ort aufweisen. Die Symbole 20 und 21 informieren den Fahrer über eine Geschwindigkeitsbegrenzung und ein Lastkraftwagenüberholverbot im von ihm befahrenen Streckenabschnitt. Die Symbole 20 und 21 sind am Rand angeordnet, um die vor dem Kraftfahrzeug 1 liegende Fahrstrecke nicht zu bedecken. Die Anordnung der Symbole 20 und 21 ist allerdings relativ beliebig, sie könnten auch am oberen Rand des Bildes 22 oder am linken Rand dargestellt werden, ohne dass sie an Aussagekraft verlieren oder gewinnen würden. Anders verhält es sich jedoch mit Symbol 23, das eine Ausfahrt anzeigt. Hier kann die reine Anzeige des Symbols problematisch sein, wenn dem Fahrer angezeigt werden soll, wo im Bild die Ausfahrt sich befindet. Die Positionierung des Symbols 23 am Ort der Ausfahrt im Bild 22 würde die vor dem Kraftfahrzeug 1 liegende Fahrstrecke bedecken. Eine Anzeige der Lokalinformation vom zugeordneten Ort entfernt liefert dem Fahrer aber nur die Angabe, dass das Kraftfahrzeug in unbestimmter Zukunft eine Ausfahrt passieren wird. Daher ist es sinnvoll, das Symbol 23 (=Bereich zur Informationanzeige) vom im Bild befindlichen Ort der Ausfahrt entfernt darzustellen, wobei die ortsgenaue Zuordnung dann durch einen Bereich zur Positionsangabe in Form eines Pfeils 24 erfolgt. Dadurch weiß der Fahrer sofort und ortsgenau, wo sich die nächste vor ihm befindliche Ausfahrt genau befindet. Diese Angabe lässt sich in der Anzeigeeinrichtung 5 des Kraftfahrzeugs 1 auch darstellen, wenn die Zielführung der Navigationseinrichtung 6 nicht aktiviert wurde.

Bei Aktivierung der Zielführung der Navigationseinrichtung 6 kann dem Fahrer als weitere Lokalinformation ein Navigationspfeil 19 dargestellt werden. Durch die Kombination der verschiedenen Sensorsignale und Informationen mehrerer Fahrerassistenzsysteme kann der Navigationspfeil spurgenau angezeigt werden. In Fig. 2 wird der Fahrer also darüber informiert, dass die empfohlene Route der Navigationseinrichtung 6 weiter geradeaus führt und die durch das Symbol 23 und den Pfeil 24 markierte Ausfahrt nicht zu benutzen ist. In diesem Fall ist es auch möglich, die Darstellung des Symbols 23 und des Pfeils 24 abzuändern, beispielsweise indem die Symbole in Grautönen dargestellt werden. So kann der Fahrer gleichzeitig darüber informiert werden, dass er eine Ausfahrt passieren wird, wo diese exakt liegt, und dass diese gemäß der Zielführung der Navigationseinrichtung 6 aber nicht zu benutzen ist.

Die Kamera 2 auf dem Kraftfahrzeug 1 ist entweder parallel zur Bodenebene ausgerichtet oder sie schließt mit der Bodenebene einen bestimmten Winkel ein. Der Navigationspfeil 19 wird dabei perspektivisch richtig an die im Bild 22 der Kamera 2 dargestellte Bodenebene angepasst, beispielsweise verjüngt er sich nach vorne hin und liegt entsprechend der Bodenebene richtig im Bild. Des Weiteren kann ein leichter Schlagschatten vorgesehen sein, damit beim Betrachter der Eindruck entsteht, dass der Navigationspfeil 19 leicht über der Bodenebene schwebt. Ist die Bodenebene allerdings gekrümmt, kann der Eindruck entstehen, dass sich der Navigationspfeil 19 entweder in die Bodenebene hineinbohrt oder dass er sich von der Bodenebene wegbewegt. Hierzu können Informationen der 3D-Kamera 3 herangezogen werden. Jedem Bildelement eines Bildes der 3D-Kamera 3 wird eine absolute Entfernung zum Chip der 3D-Kamera 3 zugeordnet, woraus sich dann die Krümmung der Bodenebene berechnen lässt. Alternativ kann die Krümmung der Bodenebene auch aus den Informationen der Navigationseinrichtung 6 gewonnen werden. Mit diesen Daten kann dann die Darstellung des Navigationspfeils 19 angepasst werden, dass die oben genannten irritierenden Darstellungen vermieden werden.

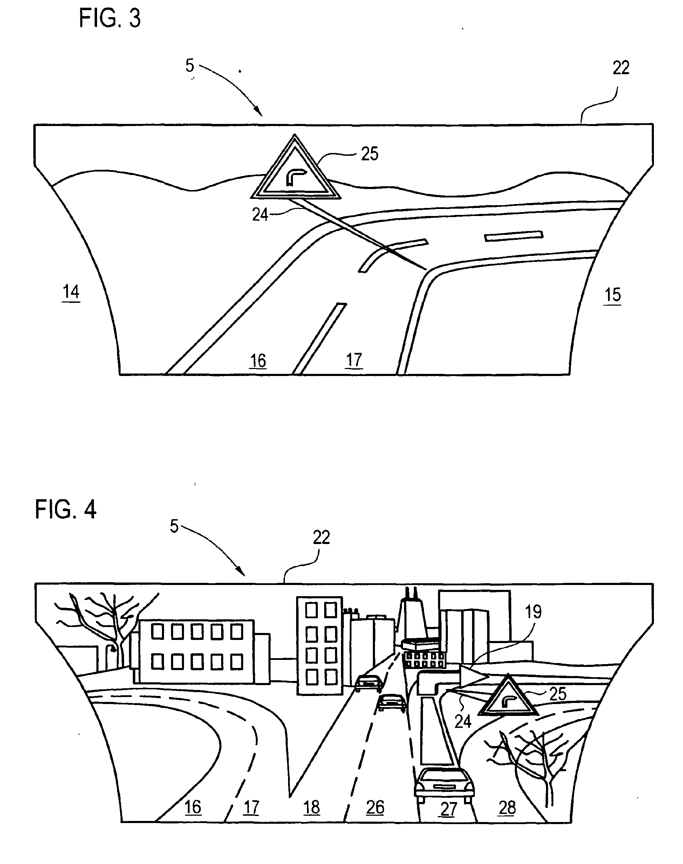

Als Lokalinformation kann auch, wie Fig. 3 zeigt, eine Information über gefährliche Straßenbedingungen angezeigt werden. Symbol 25 warnt den Fahrer vor einer engen Kurve, wobei durch den Pfeil 24 wieder die ortsgenaue Zuordnung zum Ort im Bild 22 erreicht wird. Bei herkömmlicher Anzeige des Symbols 25 am Rand der Anzeigeeinrichtung 5 hätte der Fahrer lediglich die Information, dass er in unbestimmtem Abstand und unbestimmter Zeit eine enge Kurve passieren wird. Bei vorsichtiger Fahrweise würde die Fahrgeschwindigkeit des Kraftfahrzeugs 1 dann unnötig früh und unnötig stark vermindert, um die Gefahrenstelle nicht überraschend zu erreichen und eine gefährliche Situation damit zu vermeiden. Durch die ortsgenaue Zuordnung der Lokalinformation zu dem im Ort gezeigten Bild 22 gelingt es aber, die Fahrgeschwindigkeit angemessen und rechtzeitig, aber nicht zu früh, zu regulieren. Zur Anzeige solcher Informationen ist es nicht nötig, die Zielführung der Navigationseinrichtung 6 zu aktivieren, da aus den prädikativen Streckendaten das Passieren der Gefährdungsstelle eindeutig hervorgeht, und auch eine ortsgenaue Anzeige ist ohne Zielführung möglich.

Auch bei einer unübersichtlichen Fahrsituation innerorts ist die Anzeige von Lokalinformationen wertvoll. Es ist gerade in größeren Städten nicht ungewöhnlich, wenn, wie in Fig. 4 dargestellt, eine Vielzahl an Fahrspuren 16, 17, 18, 26, 27 und 28 zur Auswahl steht. Ohne Zielführung der Navigationseinrichtung 6 kann bereits eine Zuordnung von Informationen zu Gefährdungsstellen vor dem Kraftfahrzeug 1, die von diesem potentiell befahren werden, angezeigt werden. Ist die Zielführung der Navigationseinrichtung 6 aktiviert, kann zusätzlich die Zielspur durch einen Navigationspfeil 19 angezeigt werden, ansonsten die wahrscheinlichste Route. Dieser ist bei Annäherung an einen Abbiegepunkt teilweise aufgestellt dargestellt, da der Navigationspfeil 19 bei vollständig liegender Darstellung bei ungünstigem Abstand vom Kraftfahrzeug 1 zum Abbiegepunkt nicht mehr gut darstellbar ist. Durch den Navigationspfeil 19 und das Symbol 25, das durch den Pfeil 24 genau einer auf dem Fahrweg befindlichen Gefährdungsstelle zugeordnet werden kann, weiß der Fahrer auch bei einer Auswahl einer Vielzahl an Fahrspuren 16, 17, 18, 26, 27 und 28 frühzeitig, welche zu befahren ist, wodurch unnötige Spurwechsel vermieden werden und somit die Fahrsicherheit aller Verkehrsteilnehmer erhöht wird.

Die Farbe und die Länge des Navigationspfeils 19 ist dabei vom Abstand des Kraftfahrzeugs 1 zum Abbiegepunkt abhängig. Ein Teil des Navigationspfeils 19 wird aufgestellt dargestellt, wenn sich das Kraftfahrzeug 1 unter einen gewissen Schwellenabstand dem Abbiegepunkt genähert hat. Zusätzlich wird die Farbe des Navigationspfeils verändert. Abhängig vom Abstand zum Abbiegepunkt und der Fahrgeschwindigkeit des Kraftfahrzeugs 1 kann in der Steuerungseinrichtung 4 errechnet werden, ab wann ein Abbiegen des Kraftfahrzeugs 1 am Abbiegepunkt kritisch oder auch unmöglich wird. Dementsprechend kann die Farbe des Navigationspfeils 19 in ein warnendes rot oder bei Unterschreiten einer gewissen Abstand-Fahrgeschwindigkeitskombination auch schwarz dargestellt werden. Hierdurch kann dem Fahrer allein durch Farbinformation verdeutlicht werden, dass ein Abbiegen am durch die Navigationseinrichtung errechneten Abbiegepunkt als kritisch oder auch als unmöglich erachtet wird. Dadurch kann verhindert werden, dass ein Fahrer durch unkontrollierte Bremsmanöver eventuell doch noch versucht, der durch die Navigationseinrichtung 6 vorgegebenen Zielführung oder wahrscheinlichsten Route zu folgen, obwohl das Kraftfahrzeug 1 den Abbiegepunkt realistischerweise verpasst hat. Nicht jeder Fahrer kann die Bremswirkung des Kraftfahrzeugs 1 wie auch den Abstand zum Abbiegepunkt derart richtig einschätzen, dass er weiß, ob ein Spurwechsel oder ein Abbiegen noch sinnvoll ist.

Die Transparenz des Navigationspfeils 19 hängt dabei grundsätzlich von der Umgebungshelligkeit ab. Nachts wird der Pfeil in der Anzeigeeinrichtung transparenter dargestellt, um den Fahrer einerseits nicht zu blenden und um andererseits keinen zu hohen Helligkeitskontrast zum Bild 22 der Kamera 2 zu erzeugen, da sonst das Bild 22 vom Fahrer nicht mehr wahrnehmbar ist. Die Transparenz wird derart gewählt, dass die auf der Straße vorhandenen Zeichen sichtbar bleiben. Nachts bzw. auch am Tag kann statt einer normalen Kamera eine Infrarotkamera verwendet werden. Auch die Bilder der Infrarotkamera lassen sich mit Lokalinformationen überlagern.

Die Breite des Navigationspfeils 19 sollte unterhalb von zwei Dritteln der Fahrspurbreite liegen, um die Fahrspurbegrenzungen auch bei kleineren Fehlern in der Positionsbestimmung nicht zu überdecken. Sollte die Spurerfassungseinrichtung 13 keine Spurbreiten erkennen, wird landes- und straßenklassenabhängig eine im Speicher der Steuerungseinrichtung 4 abgelegte Spurbreite verwendet.

Für den Fall, dass eine Lokalinformation aus der Navigationseinrichtung 6 zwar bereits bekannt ist, der entsprechende Ort im Bild 22 der Anzeigeeinrichtung 5 aber noch nicht enthalten ist, beispielsweise weil sich die Lokalinformation hinter einer noch zu befahrenden Kurve verbirgt, kann dem Fahrer als Vorabinformation bereits ein Symbol 25 zur Information angezeigt werden, sowie ein Hinweis 29 auf den der Lokalinformation bzw. dem Symbol 25 zugeordneten Ort, der von der Kamera 2 in einem gewissen zeitlichen Abstand erfasst werden wird. Dabei ist denkbar, dass die Darstellung des Symbols im Vergleich zur Darstellung eines Symbols mit im Bild 22 zuordnenbaren Ort nicht nur durch das Fehlen eines Pfeils und Verwendung des Hinweises 29 verändert wird, sondern dass zusätzlich die Farbe im Vergleich zur Normaldarstellung verändert wird. Beispielsweise könnte das Symbol 25 in grauen Farbtönen dargestellt werden. In diesem Fall kann als weitere Information eine Abstandsangabe in Form eines Zahlenwerts dargestellt werden. Alternativ könnte der Hinweis 29 auch pfeilförmig ausgebildet werden, wobei sich die Pfeillänge mit abnehmenden Abstand ebenfalls proportional verkürzt. Dadurch kann der Fahrer jederzeit schnell und umfassend informiert werden, ohne dass er zur Aufnahme der Information den Blick lange von der Straße abwenden müsste.

Diese Art der Darstellung kann auch verwendet werden, wenn sich der Lokalinformation zugeordnete Ort zwar im Bild 22 befindet, dieser aber durch prioritätshöhere Informationen wie etwa in Form der Symbole 20 oder 21 verdeckt wird.

Das Symbol 25 wird nicht mehr dargestellt, sobald das Kraftfahrzeug 1 den im Bild 22 zugeordneten Ort passiert hat, der Ort also auf dem zurückgelegten Fahrweg liegt.

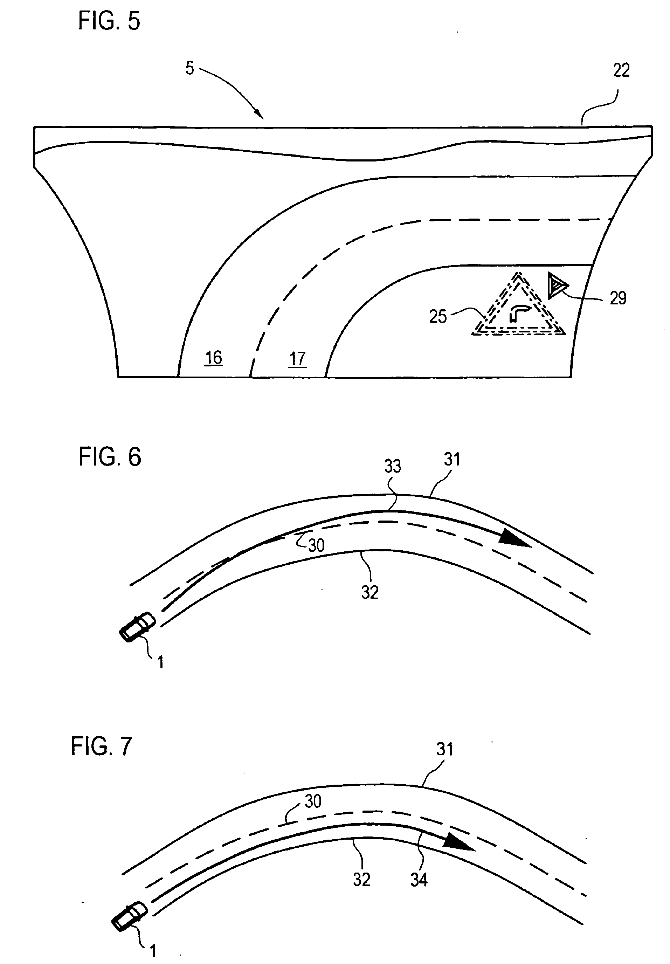

Fig. 6 zeigt das Kraftfahrzeug 1 auf einer einspurigen Straße, die als Spurbegrenzungen die Spurlinien 30, 31 und 32 aufweist. Ohne Spurerfassungseinrichtung 13 wird als Spurhypothese 33 der aus der Navigationseinrichtung 6 bekannte Straßenverlauf einfach vor das Kraftfahrzeug gelegt. Im Gegensatz dazu können, wie in Fig. 7 dargestellt ist, unter Heranziehung der prädikativen Streckendaten der Navigationseinrichtung 6 und unter Verwendung der Spurerfassungseinrichtung 13 angepasste Spurhypothesen 34 ermittelt werden. Dabei ermittelt die Spurerfassungseinrichtung 13 aus den Bildern 22 der Kamera 2 erste Spurhypothesen. Zusätzlich werden als weitere Informationen noch die Anzahl der Fahrspuren sowie ihre Krümmung aus den prädikativen Streckendaten der Navigationseinrichtung herangezogen. Unter Berücksichtigung dieser Information können die angepassten Spurhypothesen 34 ermittelt werden, die dem realen fahrbaren Spurenverlauf entsprechen.

## Patentansprüche

1. Verfahren zur kombinierten Ausgabe eines Bildes einer Bildaufnahmeeinrichtung (2) und wenigstens einer einen im Bild gezeigten Ort kennzeichnenden oder diesem zuzuordnenden Lokalinformation an einer Anzeigeeinrichtung (5) eines Kraftfahrzeugs (1), wobei die Lokalinformation derart dem Bild überlagert wird, dass eine ortsgenaue Zuordnung der Lokalinformation zu dem im Bild gezeigten Ort erfolgt,
**dadurch gekennzeichnet,**
**dass** die Darstellung der Lokalinformation einen Bereich (23;25) Anzeige einer Information und einen Bereich (24;29) zur Positionsanzeige, der die Zuordnung der Information zu einem im Bild gezeigten Ort ermöglicht, umfasst.

2. Verfahren nach Anspruch 1,
**dadurch gekennzeichnet,**
**dass** die zur ortsgenauen Zuordnung benötigten Daten über die Lokalinformation und/oder die aktuelle Position des Kraftfahrzeugs aus einer Navigationseinrichtung (6) des Kraftfahrzeugs und/oder über eine an einen Fahrzeugbus (12) angeschlossene und vom Kraftfahrzeug unabhängige Einrichtung, insbesondere ein Mobiltelefon, ermittelt werden.

3. Verfahren nach Anspruch 1 oder 2,
**dadurch gekennzeichnet,**
**dass** der Bereich zur Positionsanzeige nadel-, linien- oder pfeilförmig dargestellt wird.

4. Verfahren nach einem der vorangehenden Ansprüche,
**dadurch gekennzeichnet,**
**dass** die Darstellung der Lokalinformation bei Annäherung des Kraftfahrzeugs an den der Lokalinformation zugeordneten Ort unterproportional vergrößert und/oder ihre Farbe und/oder ihre Transparenz verändert wird.

5. Verfahren nach einem der vorangehenden Ansprüche,
**dadurch gekennzeichnet,**
**dass** die Lokalinformation ab einem vorgegebenen Abstand des Kraftfahrzeugs zu dem der Lokalinformation zugeordneten Ort angezeigt wird.

6. Verfahren nach einem der vorangehenden Ansprüche,
**dadurch gekennzeichnet,**
**dass** die Darstellung der Lokalinformation bei Nichtsichtbarkeit des entsprechenden Ortes im Bild der Bildaufnahmeeinrichtung von der Darstellung der Lokalinformation bei Sichtbarkeit des entsprechenden Ortes im Bild der Bildaufnahmeeinrichtung abweichend und auf den Ort verweisend dargestellt wird.

7. Verfahren nach einem der vorangehenden Ansprüche,
**dadurch gekennzeichnet,**
**dass** zur ortsgenauen Zuordnung der wenigstens einen Lokalinformation als gegebenenfalls weitere Information wenigstens eine Information aus einer Spurerfassungseinrichtung (13) des Kraftfahrzeugs verwendet wird.

8. Verfahren nach Anspruch 7,
**dadurch gekennzeichnet,**
**dass** zur Verbesserung der wenigstens einen Information der Spurerfassungseinrichtung wenigstens eine Information der Navigationseinrichtung verwendet wird.

9. Verfahren nach einem der vorangehenden Ansprüche,
**dadurch gekennzeichnet,**
**dass** zur ortsgenauen Zuordnung der wenigstens einen Lokalinformation als gegebenenfalls weitere Information wenigstens eine Information eines Lenkwinkelsensors (7) und/oder eines Radwinkelsensors (8) und/oder eines Blinkerbetätigungssensors (9) und/oder eines Geschwindigkeitssensors (10) und/oder eines Abstandssensors (11) und/oder eines Gierratensensors (35) des Kraftfahrzeugs verwendet wird.

10. Verfahren nach einem der vorhergehenden Ansprüche,
**dadurch gekennzeichnet,**
**dass** in der Anzeigeeinrichtung als zusätzliche Lokalinformation der empfohlene Fahrweg oder die empfohlene Fahrspur in Form eines Navigationspfeils (19) dem im Bild gezeigten Fahrbahnverlauf ortsgenau überlagert dargestellt wird.

11. Verfahren nach Anspruch 10,
**dadurch gekennzeichnet,**
**dass** die Länge und/oder die Farbe und/oder die Größe und/oder die Transparenz des Navigationspfeils in Abhängigkeit zur Entfernung zum der Lokalinformation zugeordneten Ort und/oder in Abhängigkeit der Fahrzeuggeschwindigkeit und/oder der Straßenklasse dargestellt wird.

12. Verfahren nach einem der Ansprüche 10 oder 11,
**dadurch gekennzeichnet,**
**dass** bei Annäherung des Kraftfahrzeugs an einen Abbiegepunkt der Navigationspfeil wenigstens teilweise aufgestellt dargestellt wird.

13. Verfahren nach einem der Ansprüche 10 bis 12,
**dadurch gekennzeichnet,**
**dass** die Darstellung des Navigationspfeits durch wenigstens eine Information einer 3D-Kamera (3) an die in der Anzeigeeinrichtung dargestellte Bodenebene des Bildes der Bildaufnahmeeinrichtung vor dem Kraftfahrzeug angepasst wird.

14. Kraftfahrzeug (1), umfassend wenigstens eine Bildaufnahrmeeinrichtung (2), wenigstens ein Fahrerassistenzsystem, eine Positionsbestimmungseinrichtung, eine Einrichtung zum Ermitteln wenigstens einer Lokalinformation, eine Steuerungseinrichtung (4) und eine Anzeigeeinrichtung (5) zur Durchführung des Verfahrens nach einem der Ansprüche 1 bis 13.

## Claims

1. Method for combined output of an image of an image-recording device (2) and at least one piece of local information which characterizes a locality shown in the image or is assigned thereto, on a display device (5) of a motor vehicle (1), wherein the local information is superimposed on the image in such a way that a positionally accurate assignment of the local information to the locality shown in the image occurs,
**characterized**
**in that** the representation of the local information comprises an area (23; 25) for displaying information and an area (24; 29) for displaying the position, which area (24; 29) permits the assignment of the information to a locality shown in the image.

2. Method according to Claim 1,
**characterized**
**in that** the data which are required for the positionally accurate assignment and which relate to the local information and/or the current position of the motor vehicle are determined from a navigation device (6) of the motor vehicle and/or by means of a device, in particular a mobile telephone, which is connected to a vehicle bus (12) and is independent of the motor vehicle.

3. Method according to Claim 1 or 2,
**characterized**
**in that** the area for displaying the position is represented in the form of a needle, line or arrow.

4. Method according to one of the preceding claims,
**characterized**
**in that** the representation of the local information increases disproportionately and/or its colour changes and/or its transparency changes when the motor vehicle approaches the locality which is assigned to the local information.

5. Method according to one of the preceding claims,
**characterized**
**in that** the local information is displayed starting from a predefined distance of the motor vehicle from the locality which is assigned to the local information.

6. Method according to one of the preceding claims,
**characterized**
**in that**, when the corresponding locality in the image of the image-recording device cannot be seen, the representation is represented as deviating from the representation of the local information when the corresponding locality in the image of the image-recording device can be seen, and said image is represented as pointing to the locality.

7. Method according to one of the preceding claims,
**characterized**
**in that**, for the positionally accurate assignment of the at least one local information at least one piece of information from a course-detection device (13) of the motor vehicle is used as further information, if appropriate.

8. Method according to Claim 7,
**characterized**
**in that** at least one piece of information of the navigation device is used to improve the at least one piece of information of the course-detection device.

9. Method according to one of the preceding claims,
**characterized**
**in that**, for the positionally accurate assignment of the at least one piece of local information, at least one piece of information of a steering angle sensor (7) and/or of a wheel angle sensor (8) and/or of a flashing indicating light activation sensor (9) and/or of a speed sensor (10) and/or of an inter-vehicle distance sensor (11) and/or of a yaw rate sensor (35) of the motor vehicle is used for further information, if appropriate.

10. Method according to one of the preceding claims,
**characterized**
**in that** the recommended route or the recommended course in the form of a navigation arrow (19) is represented superimposed in a positionally accurate fashion on the course of the carriageway shown in the image as additional local information in the display device.

11. Method according to Claim 10,
**characterized**
**in that** the length and/or the colour and/or the size and/or the transparency of the navigation arrow is represented as a function of the distance from the locality assigned to the local information and/or as a function of the speed of the vehicle and/or the road class.

12. Method according to one of Claims 10 and 11,
**characterized**
**in that**, when the motor vehicle approaches a turning point, the navigation arrow is represented in an at least partially upright position.

13. Method according to one of Claims 10 to 12,
**characterized**
**in that** the representation of the navigation arrow is adapted, by means of at least one piece of information of a 3-D camera (3), to the ground level, in front of the motor vehicle in the image of the image-recording device which is represented in the display device.

14. Motor vehicle (1) comprising at least one image-recording device (2), at least one driver assistance system, one position-determining device, one device for determining at least one piece of local information, one control device (4) and one display device (5) for carrying out the method according to one of Claims 1 to 13.

## Revendications

1. Procédé de délivrance combinée d'une image d'un dispositif d'acquisition d'image (2) et d'au moins une information locale caractérisant un lieu représenté dans l'image ou associée à celui-ci sur un dispositif d'affichage (5) d'un véhicule automobile (1), l'information locale étant superposée à l'image de telle sorte qu'il se produit une association précise du lieu de l'information locale avec le lieu représenté dans l'image,
**caractérisé en ce que** la représentation de l'information locale comprend une zone (23 ; 25) pour afficher une information et une zone (24 ; 29) d'affichage de la position qui permet l'association de l'information avec un lieu représenté dans l'image.

2. Procédé selon la revendication 1, **caractérisé en ce que** les données nécessaires pour l'association précise du lieu sont déterminées par le biais de l'information locale et/ou de la position actuelle du véhicule automobile à partir d'un dispositif de navigation (6) du véhicule automobile et/ou par le biais d'un dispositif raccordé à un bus du véhicule (12) et indépendant du véhicule automobile, notamment un téléphone mobile.

3. Procédé selon la revendication 1 ou 2, **caractérisé en ce que** la zone d'affichage de la position est représentée sous la forme d'une aiguille, d'une ligne ou d'une flèche.

4. Procédé selon l'une des revendications précédentes, **caractérisé en ce que** la représentation de l'information locale est grossie de manière non proportionnelle et/ou sa couleur et/ou sa transparence sont modifiées lorsque le véhicule se rapproche du lieu associé à l'information locale.

5. Procédé selon l'une des revendications précédentes, **caractérisé en ce que** l'information locale est affichée à partir d'une distance prédéfinie du véhicule automobile par rapport au lieu associé à l'information locale.

6. Procédé selon l'une des revendications précédentes, **caractérisé en ce que** la représentation de l'information locale, si le lieu correspondant n'est pas visible dans l'image du dispositif d'acquisition d'image, est représentée différemment que dans le cas où le lieu correspondant est visible dans l'image du dispositif d'acquisition d'image, et en renvoyant vers le lieu.

7. Procédé selon l'une des revendications précédentes, **caractérisé en ce qu'**au moins une information provenant d'un dispositif de détection de voie (13) du véhicule automobile est utilisée en tant qu'éventuelle information supplémentaire pour l'association précise du lieu de l'au moins une information locale.

8. Procédé selon la revendication 7, **caractérisé en ce qu'**au moins une information du dispositif de navigation est utilisée pour améliorer l'au moins une information du dispositif de détection de voie.

9. Procédé selon l'une des revendications précédentes, **caractérisé en ce qu'**au moins une information d'un détecteur d'angle de direction (7) et/ou d'un détecteur d'angle de roue (8) et/ou d'un détecteur d'actionnement du clignotant (9) et/ou d'un détecteur de vitesse (10) et/ou d'un détecteur de distance (11) et/ou d'un détecteur de taux de lacet (35) du véhicule automobile est utilisée en tant qu'éventuelle information supplémentaire pour l'association précise du lieu de l'au moins une information locale.

10. Procédé selon l'une des revendications précédentes, **caractérisé en ce que** le trajet recommandé ou la voie de circulation recommandée est représenté(e) dans le dispositif d'affichage en tant qu'information locale supplémentaire sous la forme d'une flèche de navigation (19) superposée à l'endroit précis au tracé de la voie de circulation représenté dans l'image.

11. Procédé selon la revendication 10, **caractérisé en ce que** la longueur et/ou la couleur et/ou la taille et/ou la transparence de la flèche de navigation sont représentées en fonction de la distance du lieu associé à l'information locale et/ou en fonction de la vitesse du véhicule et/ou de la catégorie de route.

12. Procédé selon l'une des revendications 10 ou 11, **caractérisé en ce que**, lorsque le véhicule automobile se rapproche d'un point de changement de direction, la flèche de navigation est représentée au moins partiellement dressée.

13. Procédé selon l'une des revendications 10 à 12, **caractérisé en ce que** la représentation de la flèche de navigation est adaptée par le biais d'au moins une information d'une caméra 3D (3) au plan de sol représenté dans le dispositif d'affichage de l'image du dispositif d'acquisition d'image devant le véhicule automobile.

14. Véhicule automobile (1) comprenant au moins un dispositif d'acquisition d'image (2), au moins un système d'assistance au conducteur, un dispositif de détermination de la position, un dispositif pour déterminer au moins une information locale, un dispositif de commande (4) et un dispositif d'affichage (5) pour mettre en oeuvre le procédé selon l'une des revendications 1 à 13.
